# EUROPÄISCHE PATENTSCHRIFT

(11) **EP 1 821 073 B1**
(45) Veröffentlichungstag und Bekanntmachung des Hinweises auf die Patenterteilung: **03.08.2016**
(21) Anmeldenummer: 06021389.9
(22) Anmeldetag: 12.10.2006
(51) Int. Cl.: G01D 5/244, G01D 5/249

(54) **Positionsmesseinrichtung**
Position measuring device
Dispositif de mesure de position

(30) Priorität: 15.02.2006 DE 102006007184
(43) Veröffentlichungstag der Anmeldung: 22.08.2007
(73) Patentinhaber: Dr. Johannes Heidenhain GmbH, 83301 Traunreut (DE)
(72) Erfinder: Mittmann, Rudolf, 83342 Tacherting (DE); Strasser, Erich, 83308 Trostberg (DE)

(56) Entgegenhaltungen:
- EP-A2- 1 400 778
- WO-A1-03/060431
- DE-A1- 10 104 373
- JP-A- H 041 522

## Beschreibung

Die Erfindung betrifft eine Positionsmesseinrichtung zur Bestimmung der absoluten Position gemäß dem Oberbegriff des Anspruchs 1 sowie ein Verfahren zum Betrieb einer absoluten Positionsmesseinrichtung gemäß dem Oberbegriff des Anspruchs 9.

Positionsmesseinrichtungen werden in Form von Winkel- und Längenmesseinrichtungen in der Werkzeugmaschinenindustrie und in anderen Fertigungs-, Handhabungs- und Prüfsystemen breit eingesetzt. Für alle Einsatzfälle gewinnt vermehrt eine hohe Funktionssicherheit an Bedeutung, da ein Fehlbetrieb erhebliche Schäden hervorrufen kann.

Zur Positionsmessung werden vermehrt absolute Positionsmesseinrichtungen eingesetzt, die in jeder Relativlage auch nach Unterbrechung der Versorgungsenergie sofort eine korrekte Positionsinformation ausgeben können. Die absolute Position wird dabei von einem einspurigen Code verkörpert, der besonders Platz sparend aus in Messrichtung hintereinander angeordneten Codeelementen besteht. Die Codeelemente sind dabei in pseudozufälliger Verteilung hintereinander angeordnet, so dass eine bestimmte Anzahl von aufeinander folgenden Codeelementen jeweils ein Codemuster bzw. Bitmuster bildet, das die absolute Position als Codewort eindeutig definiert. Bei der Verschiebung der Abtasteinrichtung um ein einziges Codeelement wird bereits ein neues Codemuster gebildet und über den gesamten absolut zu erfassenden Messbereich steht eine Folge von unterschiedlichen Codewörtern zur Verfügung. Ein derartiger sequentieller Code wird als Kettencode oder als Pseudo-Random-Code bezeichnet.

Aus dem Stand der Technik sind verschiedene Maßnahmen bekannt geworden, um ein sicheres Ablesen der Codeelemente zu gewährleisten. Diesen Maßnahmen ist gemeinsam, dass sichergestellt werden soll, dass die Codeelemente im eindeutigen Bereich, also nicht im Übergangsbereich zu den angrenzenden Codeelementen abgetastet werden. Hierzu wird aus einer Hilfsspur oder aus der Codespur selbst eine Auswahlinformation gewonnen, anhand derer die Abtastelemente zur sicheren Abtastung und Generierung eines Codewortes ausgewählt werden. Die binäre Information der ausgewählten Abtastelemente wird einer Decodiereinrichtung zur Bildung der momentanen absoluten Position zugeführt. Als Decodiereinrichtung sind abgespeicherte Zuordnungstabellen oder Generatoren gebräuchlich.

Beschrieben sind derartige Positionsmessseinrichtungen und Verfahren beispielsweise in der DE 42 09 629 A1, DE 39 42 625 A1, DE 43 09 863 C1, DE 38 25 097 C2 und WO 03/060431 A1.

Zur Erhöhung der Betriebssicherheit und zum Aufdecken eines Fehlbetriebs von absoluten Positionsmesseinrichtungen ist es üblich redundante Abtasteinheiten einzusetzen. Eine derartige Positionsmesseinrichtung ist in der EP 0789226 B1 und der JP 4-1522 A beschrieben. Es werden mehrere voneinander beabstandete Codewörter abgetastet und miteinander verglichen. Durch diese mehrfache Redundanz steigt der Hardwareaufwand und damit verbunden auch die Kosten. Bei der Positionsmesseinrichtung gemäß der DE 10104373 A1 erfolgt eine Funktionskontrolle, indem mehrere Positionsmesswerte aus den Abtastsignalen nach unterschiedlichen Verknüpfungsregeln gebildet werden.

Aufgabe der Erfindung ist es daher mit möglichst geringem Hardwareaufwand einen Fehlbetrieb der Positionsmesseinrichtung zuverlässig aufzudecken.

Diese Aufgabe wird durch eine Positionsmesseinrichtung mit den Merkmalen des Anspruchs 1 sowie mit einem Verfahren zum Betrieb einer absoluten Positionsmesseinrichtung mit den Merkmalen des Anspruchs 9 gelöst.

Der Vorteil der Erfindung besteht insbesondere darin, dass auf einfache Weise die Fehlerfreiheit der abgetasteten Codeworte bzw. erzeugten Positionsmesswerte geprüft werden kann und im Falle eines Auftretens eines Fehlers in einen sicheren Zustand einer Antriebseinheit, dessen absolute Position mit der Positionsmesseinrichtung bestimmt wird, übergegangen werden kann.

Durch die Diversität der Funktion Auswahl von Abtastelementen kann in vorteilhafter Weise die zur sicheren Abtastung sowieso schon vorhandene Hardware genutzt werden, was die Kosten und die Baugröße minimiert.

Vorteilhafte Ausbildungen der Erfindung sind in den abhängigen Ansprüchen angegeben.

Ausführungsbeispiele der Erfindung werden anhand der Zeichnungen näher erläutert.

Es zeigen:
- Figur 1: eine Prinzipdarstellung einer absoluten Positionsmesseinrichtung;
- Figur 2: eine erste Ausführungsform der Positionsmesseinrichtung im Detail;
- Figur 3: eine zweite Ausführungsform der Positionsmesseinrichtung im Detail;
- Figur 4: die Abtastung eines Codes im Detail und
- Figur 5: ein Signaldiagramm.

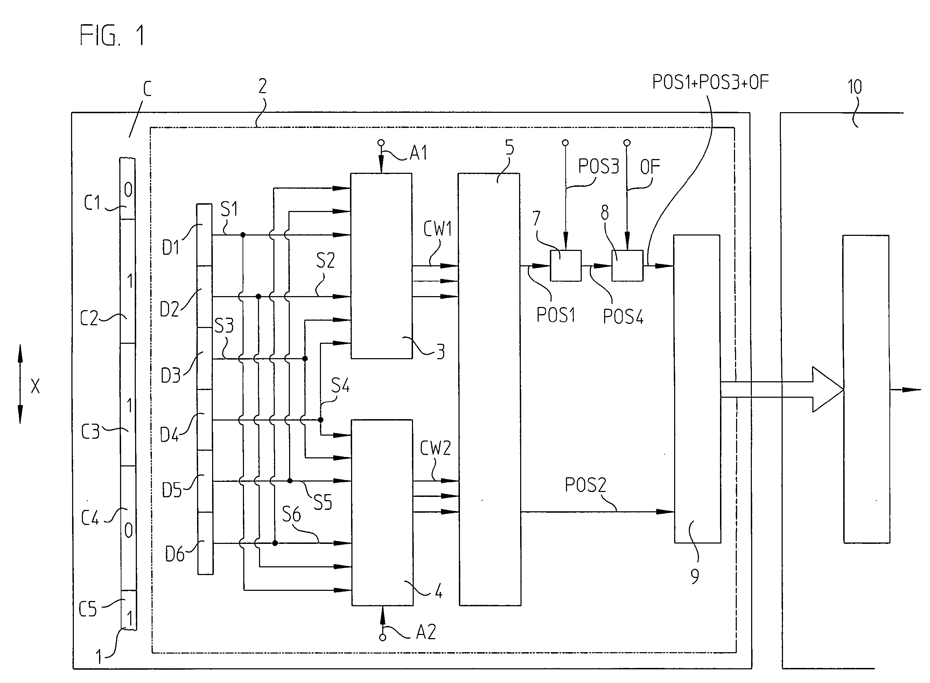

In Figur 1 ist eine erfindungsgemäß ausgestaltete absolute Positionsmesseinrichtung schematisch dargestellt. Diese Positionsmesseinrichtung ist eine Längenmesseinrichtung, die Erfindung ist aber auch bei Winkelmesseinrichtungen anwendbar.

Zur Positionsmessung ist ein Code C eines Maßstabs 1 relativ zu einer Abtasteinrichtung 2 bewegbar angeordnet. Zur Messung von Längen ist der Maßstab 1 stab- oder bandförmig ausgebildet und zur Messung von Winkeln ist der Maßstab trommel- oder scheibenförmig ausgebildet.

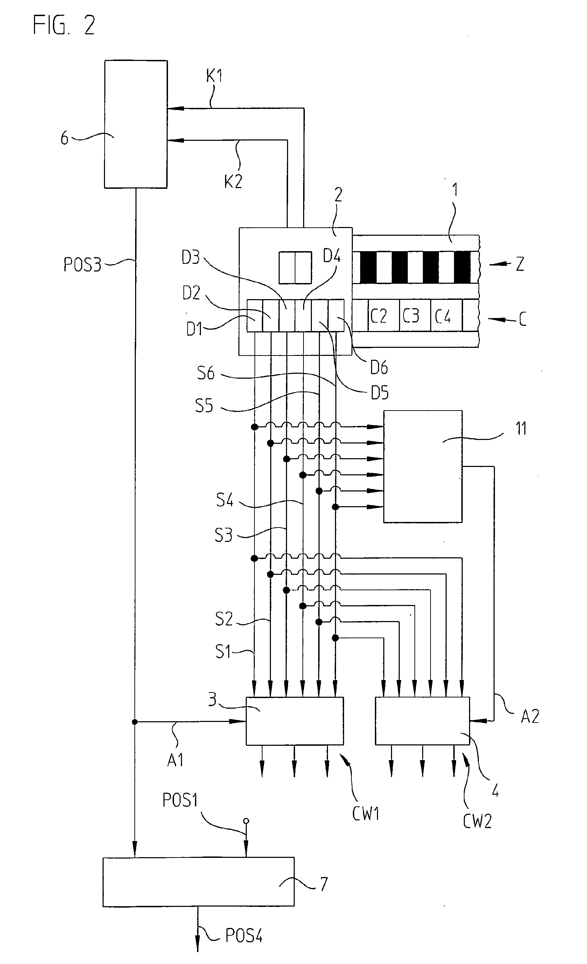

Der Code C ist in einer Spur angeordnet und besteht aus in Messrichtung X aufeinander folgenden Codeelementen C1 bis C5. Diese Codeelemente C1 bis C5 bilden einen Kettencode, das heißt, sie sind in Messrichtung X pseudozufällig verteilt und bilden eine kontinuierliche Folge von unterschiedlichen Codewörtern. In den Figuren 1 und 2 sind die Codeelemente C1 bis C5 mit 0 oder 1 bezeichnet. Diese Bezeichnung charakterisiert symbolisch die unterschiedliche physikalische Eigenschaft der einzelnen Codeelemente C1 bis C5. Handelt es sich um einen lichtelektrisch abtastbaren Code C, dann sind die mit 0 bezeichneten Codeelemente C1, C4 nicht transparent und die mit 1 bezeichneten Codeelemente C2, C3, C5 transparent, oder die mit 0 bezeichneten Codeelemente C1, C4 nicht reflektierend und die mit 1 bezeichneten Codeelemente C2, C3, C5 reflektierend. Die unterschiedliche Charakteristik 0 und 1 kann auch durch die Abfolge von Teilbereichen innerhalb eines Codeelements C1 bis C5 generiert sein, wie in der WO 03/060431 A1 offenbart und später anhand eines Beispiels noch näher erläutert wird.

Die Abtasteinrichtung 2 enthält eine Anordnung von Abtastelementen D1 bis D6 zur Abtastung des Codes C. Jedem Codeelement C1 bis C5 sind jeweils mehrere Abtastelemente D1 bis D6 zugeordnet, das bedeutet, dass der Mittenabstand der Abtastelemente D1 bis D6 ein Bruchteil der Länge eines Codeelementes C1 bis C6 ist. Die Abtastsignale S1 bis S6 der Abtastelemente D1 bis D6 werden einer ersten Auswahleinrichtung 3 zugeführt. Diese erste Auswahleinrichtung 3 wählt aufgrund einer ersten Auswahlinformation A1 einige der Abtastsignale S1 bis S6 zur Weiterverarbeitung und zur Bildung eines Codewortes CW1 aus. Dieses Codewort CW1 wird einer Decodiervorrichtung 5 zur Bildung einer ersten absoluten Position POS1 zugeführt.

Die Abtastsignale S1 bis S6 der Abtastelemente D1 bis D6 werden auch einer zweiten Auswahleinrichtung 4 zugeführt. Diese zweite Auswahleinrichtung 4 wählt aufgrund einer zweiten Auswahlinformation A2 einige der Abtastsignale S1 bis S6 zur Weiterverarbeitung und zur Bildung eines Codewortes CW2 aus. Dieses Codewort CW2 wird der Decodiervorrichtung 5 oder einer eigenen Decodiervorrichtung (nicht dargestellt) zur Bildung einer zweiten absoluten Position POS2 zugeführt.

Die Decodierung erfolgt entweder anhand einer abgespeicherten Zuordnungstabelle, wobei jedem Codewort CW der entsprechende Positionsmesswert POS1, POS2 zugeordnet ist oder mittels eines Generators, der die Codewortfolge mit einem mitlaufenden Zähler erzeugt und bei Übereinstimmung des erzeugten Codewortes mit dem abgetasteten Codewort CW den Zählerstand als Maß für die Position ausgibt. Letzte Version kann mit einem Schieberegister realisiert werden.

Die Auswahlinformationen A1 und A2 werden nach unterschiedlichen Kriterien festgelegt, die Auswahl erfolgt somit diversitär. Durch die Diversität der Auswahl wird sichergestellt, dass auch ohne vollständige Hardware-Redundanz der Abtastung eine fehlerhafte Abtastung aufgedeckt wird. Zum Aufdecken dieses Fehlers werden die beiden Positionen POS1 und POS2 im einfachsten Fall auf Gleichheit überprüft und bei Ungleichheit ein Fehlersignal erzeugt.

Die Auswahl von Abtastsignalen S1 bis S6 stellt sicher, dass zur Bildung der Codeworte CW1, CW2 bei jeder Relativlage zwischen dem Maßstab 1 und der Abtasteinrichtung 2 nur eindeutige Abtastsignale S2, S4, S6 Verwendung finden. Eindeutige Abtastsignale S2, S4, S6 werden im Beispiel gemäß Figur 1 nur von den Abtastelementen D2, D4, D6 generiert, die eindeutig nur jeweils ein Codeelement C2, C3, C4, also den Mittenbereich eines Codeelementes C1 bis C5 abtasten. Durch die Auswahl wird sichergestellt, dass unsichere Abtastsignale S1, S3, S5 nicht zur Weiterverarbeitung, also zur Positionsbestimmung verwendet werden. Unsicher sind die Abtastsignale S1, S3, S5, die von Abtastelementen D1, D3, D5 generiert werden, die Übergangsbereiche zwischen jeweils zwei aufeinander folgenden Codeelementen C1 bis C5 abtasten, also von physikalischen Zuständen zweier Codeelemente C1 bis C5 gleichzeitig beeinflusst werden.

Anhand Figur 1 wird eine besonders vorteilhafte Weiterverarbeitung der ersten absoluten Position POS1 und der zweiten absoluten Position POS2 erläutert. Um auch die insbesondere serielle Schnittstelle 9 und die Übertragung zwischen der Positionsmesseinrichtung und einer Folgeeinheit 10 in die Prüfung auf Korrektheit mit einzubeziehen, werden beide absolute Positionsmesswerte POS1 und POS2 zu der Folgeeinheit 10, z.B. einer numerischen Steuerung bzw. einer Antriebseinheit übertragen, wo dann erst der Vergleich zur Fehlerprüfung stattfindet.

Vorteilhaft ist dabei, wenn zumindest einer der absoluten Positionsmesswerte POS1 und POS2 vor der Übertragung derart verändert wird, dass die beiden über die Schnittstelle 9 übertragenen Werte unterschiedlich sind. Im einfachsten Fall wird einem der absoluten Positionsmesswerte POS1 in einer Veränderungseinheit 8 ein bekannter Offset OF aufgeschaltet, der dann beim Vergleich in der Folgeeinheit 10 wieder berücksichtigt werden kann.

Zur hochgenauen Positionsmessung reicht in vielen Fällen die Auflösung der absoluten Positionsmessung durch den Code C allein nicht aus. Deshalb existieren verschieden Möglichkeiten, um die absolute Position POS1 durch einen höher auflösenden Positionsmesswert POS3 zu ergänzen. Dieser höher auflösende Positionsmesswert POS3 kann auf verschiedenste Weise gewonnen werden, z.B. direkt aus dem Code C selbst, indem zusätzlich die Position der Kanten der Codeelemente C1 bis C5 (Übergänge) bezüglich der Abtastelemente D1 bis D6 ausgewertet wird und daraus ein periodisches Inkrementalsignal gewonnen wird, das in bekannter Weise interpoliert wird. Eine weitere Möglichkeit zur Gewinnung eines höher auflösenden Positionsmesswertes POS3 besteht darin, dass eine Zusatzinformation Z parallel zum Code C angeordnet ist, beispielsweise in Form einer oder mehrerer Inkrementalspuren (Figur 2).

Dieser höher auflösende Positionsmesswert POS3 wird mit zumindest einem der absoluten Positionsmesswerte POS1, POS2 verknüpft und der somit gewonnene resultierende absolute Positionsmesswert POS4 mit dem Offset OF beaufschlagt als Wert (POS1+POS3+OF) zur Folgeeinheit 10 übertragen. Der resultierende absolute Positionsmesswert POS4 besteht aus einer Folge von Bits, von denen die durch die höherauflösende Positionsmessung gewonnenen niederwertigeren Bits den absoluten Positionsmesswert POS1 weiter auflösen. Wird der höher auflösende Positionsmesswert POS3 nur mit einem der absoluten Positionsmesswerten POS1 verknüpft, werden zur Fehlerprüfung in der Folgeeinheit 10 nur die gemeinsamen höherwertigeren Bits miteinander verglichen.

Nachfolgend werden nun Möglichkeiten zur Bildung der Auswahlinformation A1 und A2 erläutert.

Anhand von Figur 2 wird ein erstes Ausführungsbeispiel zur Generierung der Auswahlinformation A1, A2 näher erläutert. Bei diesem Beispiel weist der Maßstab 1 außer dem Code C noch eine Zusatzinformation Z auf. Diese Zusatzinformation Z auf dem Maßstab 1 ist parallel zum Code C angeordnet und durch Abtastung wird daraus eine Position POS3 gewonnen, die ein Codeelement C1 bis C5 in mehrere Abschnitte unterteilt, also die absolute Position POS3 innerhalb eines Codeelements C1 bis C5 eindeutig definiert. Diese Zusatzinformation Z ist beispielsweise eine inkrementale Teilung mit einer Teilungsperiode, die der Breite eines Codeelements C1 bis C5 entspricht. Durch Abtastung der inkrementalen Teilung werden gegeneinander phasenverschobene Abtastsignale K1, K2 generiert, aus denen in einer Interpolationseinheit 6 die absolute Position POS3 innerhalb einer Teilungsperiode berechnet wird. Da die Lage der inkrementalen Teilung den Codeelementen C1 bis C5 fest zugeordnet ist, kann damit die exakte Lage der Abtasteinrichtung 2 gegenüber dem Maßstab 1 und somit die exakte Lage der Abtastelemente D1 bis D6 relativ zu den Codeelementen C1 bis C5 bestimmt werden, und zwar jeweils absolut eindeutig innerhalb eines Codeelements C1 bis C5. Diese absolute Position POS3 ergänzt einerseits den Positionswert POS1, indem in einer an sich bekannten Anschlusslogik 7 ein resultierender absoluter Positionsmesswert POS4 gebildet wird und bildet andererseits die Auswahlinformation A1. Eine derartige Auswahlmethode ist auch in der DE 39 42 625 A1 und der DE 42 09 629 A1 beschrieben.

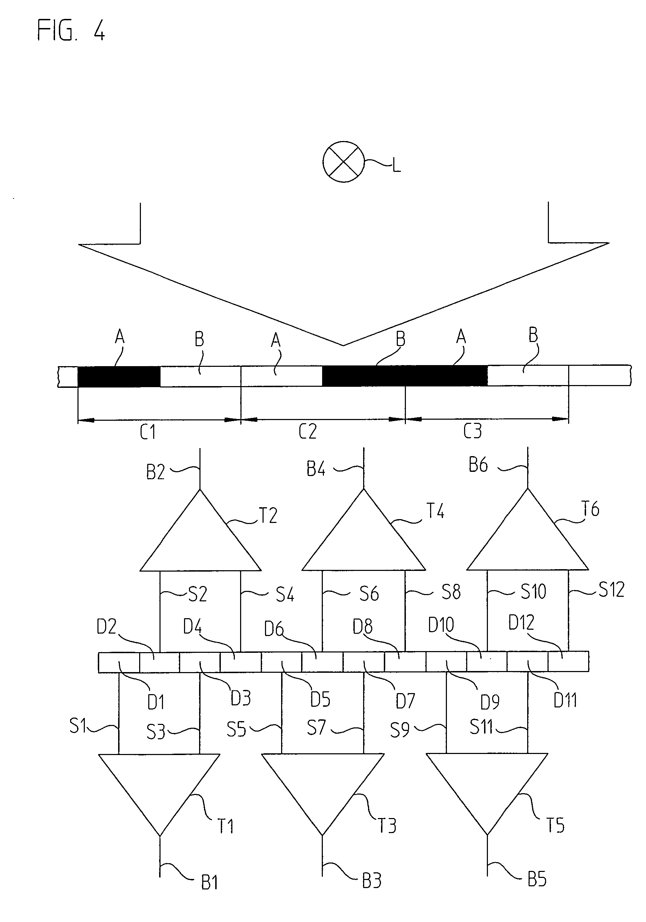

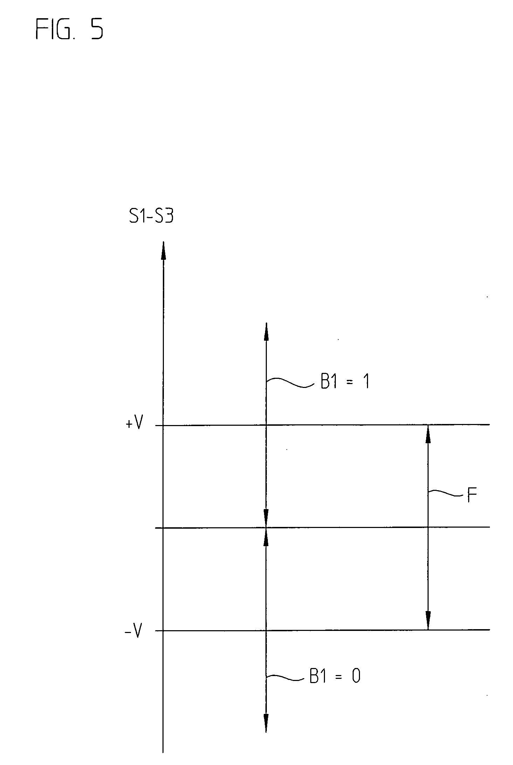

Erfindungsgemäß erfolgt nun eine weitere Auswahl diversitär. Im Beispiel gemäß Figur 2 erfolgt die weitere Auswahl mit Hilfe des Codes C selbst. Anhand der Figuren 4 und 5 wird dies anschaulich erläutert. Die Codeelemente C1, C2, C3 (aus Platzgründen nur drei dargestellt) bestehen jeweils aus zwei gleich langen in Messrichtung X unmittelbar aufeinander folgend angeordneten Teilbereichen A und B. Die Teilbereiche A und B eines Codeelements C1, C2, C3 sind zueinander komplementär ausgebildet, das heißt, dass sie inverse Eigenschaften besitzen, also beim optischen Abtastprinzip gemäß Figur 4 transparent und nicht transparent, bzw. bei Auflicht-Abtastung reflektierend bzw. nicht reflektierend sind.

Um für jedes Codeelement C1 bis C3 einen digitalen Wert bzw. ein Bit zu erzeugen, werden die Abtastsignale S1 bis S12 der beiden Teilbereiche A, B eines Codeelements C1 bis C3 jeweils miteinander verglichen. Bei einer Verschiebung der Abtasteinrichtung 2 gegenüber dem Code C um die Breite bzw. Länge eines Codeelements C1, C2, C3 wird ein neues Codewort erzeugt und über den absolut zu vermessenden Messbereich wird eine Vielzahl von unterschiedlichen Codewörtern gebildet.

Figur 4 zeigt eine Momentanstellung des Codes C relativ zur Abtasteinrichtung 2. Die Abtastelemente D1 bis D12 sind aufeinander folgend in einem Mittenabstand mit der halben Breite eines Teilbereiches A, B des Codes C angeordnet. Dadurch ist sichergestellt, dass in jeder Position zumindest ein Abtastelement D1 bis D12 einem Teilbereich A, B eines Codeelementes C1, C2, C3 eindeutig zugeordnet ist und nicht einen Übergang zwischen zwei Teilbereichen A, B abtastet. In der dargestellten Position wird der Teilbereich C1,A vom Abtastelement D1 und der Teilbereich C1,B vom Abtastelement D3 abgetastet. Die Abtastelemente D1, D3 erfassen die Lichtverteilung und erzeugen in Abhängigkeit der Lichtintensität ein analoges Abtastsignal S1, S3 proportional zur Lichtintensität. Da die beiden Teilbereiche C1,A und C1,B komplementär zueinander ausgebildet sind, ist auch die Intensität der Abtastsignale S1 und S3 invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale S1, S3 des Codeelementes C1 größer ist. Diese Prüfung kann durch Quotientenbildung oder durch Differenzbildung erfolgen. Am Beispiel wird die Differenzbildung eingesetzt, wozu gemäß Figur 4 als Vergleichseinrichtung ein Triggerbaustein T1 dient. Der Triggerbaustein T1 erzeugt B1=0, wenn S1 kleiner S3 und B1=1, wenn S1 größer S3 ist. In gleicher Weise werden binäre Informationen B2 bis B6 durch Abtastung der Codeelemente C2, C3 und Vergleich der analogen Abtastsignale S1 bis S12 mittels Triggerbausteine T2 bis T6 gewonnen. In Figur 4 sind aus Platzgründen nicht alle Vergleichselemente (Triggerbausteine) dargestellt, so werden in der Praxis auch die Abtastsignale S3 des Abtastelementes D3 mit dem Abtastsignal S5 des Abtastelementes D7 verglichen, S4 mit S6, S7 mit S9, S8 mit S10 usw..

Einer ersten Abfolge der komplementär zueinander ausgebildeten Teilbereiche A, B wird also ein erster digitaler Wert und einer zweiten Abfolge der komplementär zueinander ausgebildeten Teilbereiche A, B wird ein zweiter digitaler Wert zugeordnet. Im Beispiel wird der Abfolge opak → transparent der Wert 0 und der Abfolge transparent → opak der Wert 1 zugeordnet.

Da die beiden Teilbereiche A und B jedes Codeelementes C1, C2, C3 zueinander komplementär sind, ist der Störabstand der Abtastsignale S1 bis S12 sehr groß. Eine Veränderung der Lichtintensität der Lichtquelle L beeinflusst die Abtastsignale S1 bis S12 beider Teilbereiche A und B gleichermaßen.

Aufgrund der komplementären Ausgestaltung jeweils zweier Teilbereiche A, B eines Codeelementes C1, C2, C3 müssen bei korrekter Betriebsweise der Positionsmesseinrichtung durch Abtastung dieser Teilbereich A, B jeweils analoge Abtastsignale S1 bis S12 erzeugt werden, deren Differenz einen vorgegebenen Wert übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1 bis B6 unsicher ist und daher zu dieser binären Information B1 bis B6 ein Fehlersignal F erzeugt wird.

Durch Differenzbildung (S1 - S3) der analogen Abtastsignale S1 und S3 des Codeelementes C1 wird geprüft, ob der Differenzbetrag einen vorgegebenen Vergleichswert V übersteigt oder nicht übersteigt. Wenn der Differenzbetrag (S1 - S3) den vorgegebenen Vergleichswert V nicht übersteigt, wird ein Fehlersignal F ausgegeben. In Figur 5 sind diese Signalverhältnisse dargestellt.

Die Anordnung der beiden Teilbereiche A und B jedes Codeelementes C1, C2, C3 aufeinander folgend direkt nebeneinander in Messrichtung X hat den Vorteil, dass die Abtastelemente D1 bis D12 in einem geringen Abstand in Messrichtung X nebeneinander angeordnet werden können und somit die Positionsmesseinrichtung gegen Verdrehung der Abtasteinrichtung 2 gegenüber dem Code C, also gegen Moire-Schwankungen unempfindlich ist. Weiterhin ist die Störempfindlichkeit gegen Verschmutzungen gering, da davon ausgegangen werden kann, dass beide Teilbereiche A und B eines Codeelementes C1, C2, C3 gleichermaßen beeinflusst werden.

Am Beispiel der Abtastelemente D1 und D2 ist in Figur 4 leicht erkennbar, dass in der dargestellten Momentanstellung die geradzahligen Abtastelemente D2, D4, D6, D8, D10, D12 jeweils an einem Übergang zwischen zwei Teilbereichen A, B stehen und somit die Triggerbausteine T2, T4, T6 keine einem Codeelement C1, C2, C3 zugeordnete korrekte binäre Information B2, B4, B6 liefern.

Nachfolgend werden nun Maßnahmen erläutert, mit denen sichergestellt wird, dass zur Codeworterzeugung die korrekten Abtastelemente D1 bis D12 verwendet werden, also die Abtastelemente D1 bis D12, die jeweils die Teilbereiche A, B eines einzigen Codeelementes C1, C2, C3 abtasten.

Zur Auswahl der jeweils einen Teilbereich A, B der Codeelemente C1 bis C3 sicher und eindeutig abtastenden Abtastelemente D1 bis D12 bzw. der davon generierten Abtastsignale S1 bis S12 werden die Abtastelemente D1 bis D12, die im Abstand der Länge eines Teilbereichs A, B voneinander beabstandet sind miteinander verglichen. Dieser Vergleich erfolgt gemäß Figur 4 mit Vergleichselementen T1 bis T6, die in Abhängigkeit der Differenz der Eingangssignale ein Fehlersignal F und/oder einen Binärwert B1 bis B6 = 0 bzw. 1 ausgeben. Die Vergleichsergebnisse der Abtastelemente D1 bis D12, die in einem Raster entsprechend der Länge eines Codeelements C1, C2, C3 angeordnet sind, bilden eine Gruppe. Ausgewählt werden nun die Abtastelemente D1 bis D12 der Gruppe, deren Folge am wenigsten Fehlersignale F aufweist. In Figur 4 bilden die geradzahligen Abtastelemente eine Gruppe und die ungeradzahligen Abtastelemente eine weitere Gruppe. In der dargestellten Relativlage werden die geradzahligen Abtastelemente ausgewählt, also die Ausgangssignale B1, B3, B4 (Codewort CW2) der unteren Vergleichselemente T1, T3, T5. Diese beschriebene Auswahlroutine generiert die zweite Auswahlinformation A2. Mit der zweiten Auswahlinformation A2 werden also die Abtastsignale einer Gruppe von Abtastelementen bzw. Abtastsignalen zur Weiterverarbeitung und zur Bildung des Positionsmesswertes POS2 ausgewählt.

Die Zusatzinformation Z muss nicht zwingend nur eine Inkrementalteilung sein, sie kann auch aus mehreren Inkrementalteilungen bestehen. Die Zusatzinformation Z besteht in vorteilhafter Weise aus einer Kombination von absoluten Codierungen mit einer inkrementalen Teilung, einspurig oder mehrspurig oder aus einer inkrementalen Teilung mit einer integrierten Markierung, wie in der DE 102 44 234 A1 beschrieben ist. In diesem Fall kann die inkrementale Teilung als Zusatzinformation Z auch in vorteilhafter Weise eine kleinere Teilungsperiode aufweisen, wie die Länge eines Codeelementes C1 bis C5, da zur Bestimmung der eindeutigen absoluten Position POS3 innerhalb eines Codeelementes C1 bis C5 die absolute Codierung oder die Markierung dient.

Die Gewinnung der ersten Auswahlinformation A1 aus einer Zusatzinformation Z, die parallel zum Code C angeordnet ist, und die Gewinnung der zweiten Auswahlinformation A2 aus dem Code C hat den Vorteil, dass beide Auswahlinformationen A1, A2 von unterschiedlichen Orten des Maßstabs 1 gewonnen werden. Hierfür ist keine zusätzliche Hardware-Redundanz erforderlich, da diese Zusatzinformation Z gleichzeitig zur Gewinnung eines den absoluten Positionsmesswert POS1 ergänzenden Positionsmesswert POS3 dient.

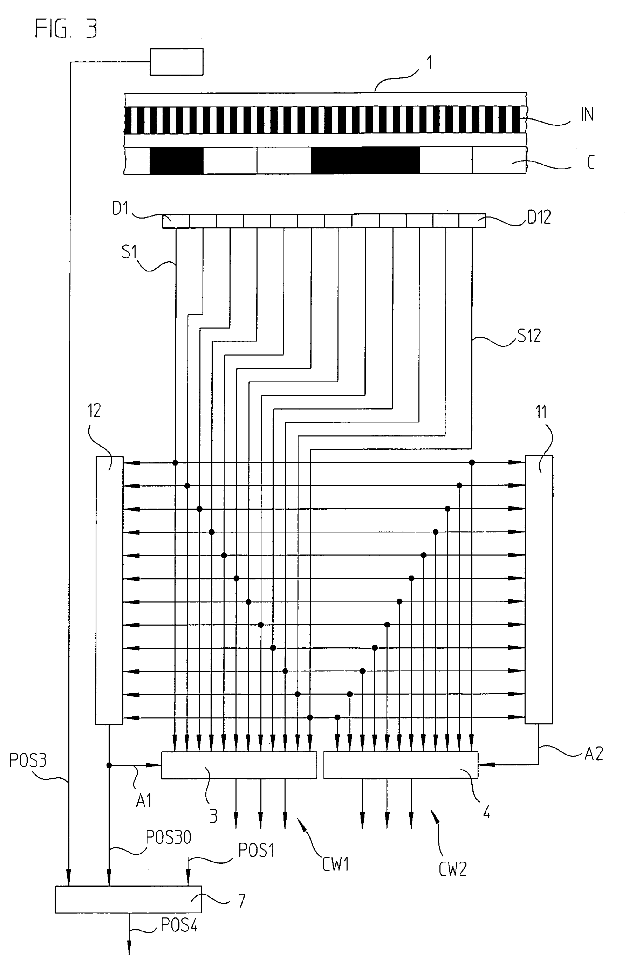

In Figur 3 ist ein weiteres Ausführungsbeispiel dargestellt. Gleichwirkende Komponenten werden in allen Figuren mit den gleichen Bezugszeichen versehen. Im Unterschied zu den oben erläuterten Ausgestaltungen der Erfindung dient hier die Inkrementalteilung IN nur zur Ergänzung des Positionsmesswertes POS1 aus der Codierung C. Die zweite Auswahlinformation A2 wird wie oben beschrieben und hier schematisch als Baustein 11 dargestellt direkt aus dem Code durch Differenzbildung von Abtastsignalen S1 bis S12 der Teilbereiche A, B der Codeelemente C1 bis C3 gewonnen. Die erste Auswahlinformation A1 wird ebenfalls aus dem Code C gewonnen, nur nach einem anderen Kriterium, nämlich durch Auswertung der Kanten (Übergänge) aufeinander folgender Teilbereiche A, B der Codeelemente C1 bis C3. Der Baustein 12 zur Gewinnung des Auswahlsignals A1 ist ebenfalls nur schematisch dargestellt. Dabei wird ausgenutzt, dass jedes Codeelement C1 bis C3 aus einer Abfolge von invers zueinander ausgebildeten Teilbereichen A, B besteht und somit eine Kante in Form eines Übergangs von einer physikalischen Eigenschaft zu einer inversen physikalischen Eigenschaft aufweist. Diese Kanten sind in einem konstanten Raster entsprechend der Länge eines Codeelementes C1 bis C3 angeordnet, so dass daraus ein periodisches Signal gewonnen werden kann, das in bekannter Weise interpoliert wird und dadurch ein die Länge eines Codeelementes C1 bis C3 absolut unterteilender Positionsmesswert POS30 gewonnen wird. Hierzu wird beispielsweise auf die WO 02/01160 A1 verwiesen. Der relativ grob auflösende Positionsmesswert POS1 und der weiter auflösende Positionsmesswert POS30 sowie der fein auflösende Positionsmesswert POS3 werden in der Anschlusslogik 7 zum resultierenden absoluten Positionsmesswert POS4 miteinander verknüpft.

Die Erfindung ist bei lichtelektrischen Abtastungen sowie anderen Abtastprinzipien, beispielsweise magnetisch, kapazitiv und induktiv einsetzbar.

## Patentansprüche

1. Positionsmesseinrichtung mit
einer Anordnung von Abtastelementen (D1 bis D12) zur Abtastung eines absoluten Codes (C), der in einer Spur angeordnet ist und aus in Messrichtung X aufeinander folgenden Codeelementen (C1 bis C5) besteht, die einen Kettencode bilden, wobei jedem Codeelement (C1 bis C5) jeweils mehrere der Abtastelemente (D1 bis D12) zugeordnet sind, indem der Mittenabstand der Abtastelemente (D1 bis D6) ein Bruchteil der Länge eines Codeelementes (C1 bis C6) ist;
einer Auswahleinrichtung (3, 4) zur Auswahl von Abtastsignalen (S1 bis S12) dieser Abtastelemente (D1 bis D12);
einer Decodiereinrichtung (5) zur Bildung eines absoluten Positionsmesswertes (POS1) aus den ausgewählten Abtastsignalen (S1 bis S12), **dadurch gekennzeichnet, dass** die Positionsmesseinrichtung dazu ausgelegt ist eine erste Auswahlinformation (A1) und eine zweite Auswahlinformation (A2) nach unterschiedlichen Kriterien festzulegen und
eine Auswahleinrichtung (3, 4) umfasst, die dazu ausgelegt ist zur Auswahl nach einer ersten Methode sowie zur Auswahl nach einer zweiten Methode, die sich von der ersten Methode unterscheidet, indem die Abtastsignale (S1 bis S12) bei der ersten Methode aufgrund der ersten Auswahlinformation (A1) ausgewählt werden und bei der zweiten Methode aufgrund der zweiten Auswahlinformation (A2) ausgewählt werden, und wobei aus den nach der ersten Methode ausgewählten Abtastsignalen (S1 bis S12) ein erster absoluter Positionsmesswert (POS1) ermittelt wird und aus den nach der zweiten Methode ausgewählten Abtastsignalen (S1 bis S12) ein zweiter absoluter Positionsmesswert (POS2) ermittelt wird.

2. Positionsmesseinrichtung nach Anspruch 1, **dadurch gekennzeichnet, dass** parallel zum Code (C) eine Zusatzinformation (Z) angeordnet ist, aus der durch Abtastung die erste Auswahlinformation (A1) gewonnen wird, die an einer ersten Auswahleinrichtung (3) ansteht, und dass eine zweite Auswahleinrichtung (4) vorgesehen ist, der die zweite Auswahlinformation (A2) zugeführt ist, die von den Abtastsignalen (S1 bis S12) des Codes (C) abgeleitet ist.

3. Positionsmesseinrichtung nach Anspruch 1, **dadurch gekennzeichnet, dass** eine erste Auswahleinrichtung (3) vorgesehen ist, der die erste Auswahlinformation (A1) zugeführt ist, die von den Abtastsignalen (S1 bis S12) des Codes (C) abgeleitet ist, und dass eine zweite Auswahleinrichtung (4) vorgesehen ist, der die zweite Auswahlinformation (A2) zugeführt ist, die ebenfalls von den Abtastsignalen (S1 bis S12) des Codes (C) abgeleitet ist.

4. Positionsmesseinrichtung nach einem der vorhergehenden Ansprüche, **dadurch gekennzeichnet, dass** der erste Positionsmesswert (POS1) und der zweite Positionsmesswert (POS2) an einer Schnittstelle (9) zur Übertragung an eine externe Folgeeinheit (10) ansteht.

5. Positionsmesseinrichtung nach Anspruch 4, **dadurch gekennzeichnet, dass** eine Veränderungseinheit (8) vorgesehen ist, der zumindest einer der ersten bzw. zweiten Positionsmesswerte (POS1, POS2) zugeführt ist, um zumindest einen der ersten bzw. zweiten Positionsmesswerte (POS1, POS2) derart zu verändern, dass die an der Schnittstelle (9) zur Übertragung an die externe Folgeeinheit (10) anstehenden Positionsmesswerte (POS2, POS1+POS3+OF) unterschiedlich sind.

6. Positionsmesseinrichtung nach einem der vorhergehenden Ansprüche 2 bis 5, **dadurch gekennzeichnet, dass**
der Code (C) aus einer Folge von in Messrichtung X hintereinander angeordneten Codeelementen (C1 bis C5) besteht, wobei jedes Codeelement (C1 bis C5) jeweils aus zwei Teilbereichen (A, B) besteht, die zueinander komplementär sind;
der Mittenabstand aufeinander folgender Abtastelemente (D1 bis D12) kleiner ist als die Länge eines Teilbereichs (A, B);
jeweils Abtastsignale (S1 bis S12) von Abtastelementen (D1 bis D12) mit einem gegenseitigen Mittenabstand entsprechend der Länge eines Teilbereichs (A, B) jeweils einer Vergleichseinrichtung (T1 bis T6) zugeführt sind, die in Abhängigkeit des Vergleichsergebnisses eine binäre Information (B1 bis B6) für das Codeelement (C1 bis C5) bildet.

7. Positionsmesseinrichtung nach Anspruch 6, **dadurch gekennzeichnet, dass** die Vergleichseinrichtungen (T1 bis T6) dazu ausgelegt sind, die Differenz der Abtastsignale (S1 bis S12) mit einer Solldifferenz (V) zu vergleichen und bei Unterschreiten der Solldifferenz (V) ein Fehlersignal (F) abzugeben.

8. Positionsmesseinrichtung nach Anspruch 7, **dadurch gekennzeichnet, dass** die zweite Auswahleinrichtung (4) Abtastsignale (S1 bis S12) einer Gruppe von Abtastelementen (D1 bis D12) auswählt, die in einem gegenseitigen Mittenabstand entsprechend der Länge eines Teilbereichs (A, B) angeordnet sind, wobei die Gruppe ausgewählt wird, dessen Abtastsignale (S1 bis S12) am wenigsten Fehlersignale (F) abgibt.

9. Verfahren zum Betrieb einer absoluten Positionsmesseinrichtung, mit folgenden Verfahrensschritten:
Abtastung eines absoluten Codes (C) mit einer Anordnung von Abtastelementen (D1 bis D12), wobei der Code (C) in einer Spur angeordnet ist und aus in Messrichtung X aufeinander folgenden Codeelementen (C1 bis C5) besteht, die einen Kettencode bilden, wobei jedem Codeelement (C1 bis C5) jeweils mehrere der Abtastelemente (D1 bis D12) zugeordnet sind, indem der Mittenabstand der Abtastelemente (D1 bis D6) ein Bruchteil der Länge eines Codeelementes (C1 bis C6) ist;
Auswahl von Abtastsignalen (S1 bis S12) dieser Abtastelemente (D1 bis D12);
Bildung eines absoluten Positionsmesswertes (POS1) aus den ausgewählten Abtastsignalen (S1 bis S12), **gekennzeichnet durch** Festlegen einer ersten Auswahlinformation (A1) und einer zweiten Auswahlinformation (A2) nach unterschiedlichen Kriterien;
Auswahl von Abtastsignalen (S1 bis S12) nach einer ersten Methode in Abhängigkeit der ersten Auswahlinformation (A1) sowie Auswahl nach einer zweiten Methode in Abhängigkeit der zweiten Auswahlinformation (A2), die sich von der ersten Methode unterscheidet;
Bildung eines ersten Positionsmesswertes (POS1) aus den nach der ersten Methode ausgewählten Abtastsignalen (S1 bis S12);
Bildung eines zweiten Positionsmesswertes (POS2) aus den nach der zweiten Methode ausgewählten Abtastsignalen (S1 bis S12), und
zur Verfügung stellen des ersten Positionsmesswertes (POS1) und des zweiten Positionsmesswertes (POS2) zur Fehlerprüfung.

10. Verfahren nach Anspruch 9, **dadurch gekennzeichnet, dass** die erste Auswahlinformation (A1) durch Abtastung einer parallel zum Code (C) angeordneten Zusatzinformation (Z) gewonnen wird, und dass die zweite Auswahlinformation (A2) durch Abtastung des Codes (C) gewonnen wird.

11. Verfahren nach Anspruch 9, **dadurch gekennzeichnet, dass** die erste Auswahlinformation (A1) durch Abtastung des Codes (C) gewonnen wird, und dass die zweite Auswahlinformation (A2) ebenfalls durch Abtastung des Codes (C) gewonnen wird.

12. Verfahren nach einem der Ansprüche 9 bis 11, **dadurch gekennzeichnet, dass** der erste Positionsmesswert (POS1) und der zweite Positionsmesswert (POS2) zur Fehlerprüfung miteinander verglichen werden.

13. Verfahren nach Anspruch 12, **dadurch gekennzeichnet, dass** der erste Positionsmesswert (POS1) und der zweite Positionsmesswert (POS2) an eine Folgeeinheit (10) übertragen werden.

14. Verfahren nach Anspruch 13, **dadurch gekennzeichnet, dass** zumindest einer der ersten bzw. zweiten Positionsmesswerte (POS1, POS2) vor der Übertragung derart verändert wird, dass die übertragenen Positionsmesswerte (POS2, POS1+POS3+OF) unterschiedlich sind.

15. Verfahren nach einem der vorhergehenden Ansprüche 9 bis 14, **gekennzeichnet durch** die Verfahrensschritte:
Abtasten eines Codes (C), bestehend aus einer Folge von in Messrichtung X hintereinander angeordneten Codeelementen (C1 bis C5), wobei die Codeelemente (C1 bis C5) jeweils aus zueinander komplementären Teilbereichen (A, B) bestehen und
Generieren von Abtastsignalen (S1 bis S12) aus Abtastelementen (D1 bis D12), die mit einem gegenseitigen Mittenabstand kleiner als die Länge eines Teilbereichs (A, B) angeordnet sind, und
Zuführen jeweils zweier Abtastsignale (S1 bis S12) von Abtastelementen (D1 bis D12), die entsprechend der Länge eines Teilbereichs (A, B) angeordnet sind, einer Vergleichseinrichtung (T1 bis T6), die in Abhängigkeit des Vergleichsergebnisses eine binäre Information (B1 bis B6) für das Codeelement (C1 bis C5) bildet.

16. Verfahren nach Anspruch 15, **dadurch gekennzeichnet, dass** das Vergleichsergebnis mit einem Sollwert (V) verglichen wird und bei Abweichung vom Sollwert (V) ein Fehlersignal (F) gebildet wird

17. Verfahren nach Anspruch 16, **dadurch gekennzeichnet, dass** bei der zweiten Methode die binären Informationen (B1 bis B6) der Abtastelementenpaare in einem Raster entsprechend der Länge eines Codeelementes (C1, C2, C3) zur Bildung des zweiten absoluten Positionsmesswertes (POS2) ausgewählt werden, dessen Folge am wenigsten Fehler (F) erzeugt.

## Claims

1. Position measuring device, comprising an arrangement of scanning elements (D1 to D12) for scanning an absolute code (C), which is arranged on a track and consists of code elements (C1 to C5) following one another in a measurement direction X, which form a chain code, wherein a number of the scanning elements (D1 to D12) are respectively associated with each code element (C1 to C5) by virtue of the centre-to-centre spacing of the scanning elements (D1 to D6) being a fraction of the length of a code element (C1 to C6) ;
a selection device (3, 4) for selecting scanning signals (S1 to S12) of these scanning elements (D1 to D12);
a decoding device (5) for forming an absolute position measurement value (POS1) from the selected scanning signals (S1 to S12), **characterized in that** the position measuring device is configured to set a first item of selection information (A1) and a second item of selection information (A2) according to different criteria and
comprises a selection device (3, 4) which is configured for a selection according to a first method and for a selection according to a second method which differs from the first method by virtue of the scanning signals (S1 to S12) being selected due to the first item of selection information (A1) in the first method and being selected due to the second item of selection information (A2) in the second method, and wherein a first absolute position measurement value (POS1) is established from the scanning signals (S1 to S12) selected according to the first method and a second absolute position measurement value (POS2) is established from the scanning signals (S1 to S12) selected according to the second method.

2. Position measuring device according to Claim 1, **characterized in that** an additional item of information (Z) is arranged parallel to the code (C), from which additional item of information the first item of selection information (A1) which is present at the first selection device (3) is obtained and **in that** a second selection device (4) is provided, to which the second item of selection information (A2), which is derived from the scanning signals (S1 to S12) of the code (C), is fed.

3. Position measuring device according to Claim 1, **characterized in that** a first selection device (3) is provided, to which the first item of selection information (A1), which is derived from the scanning signals (S1 to S12) of the code (C), is fed and **in that** a second selection device (4) is provided, to which the second item of selection information (A2), which is likewise derived from the scanning signals (S1 to S12) of the code (C), is fed.

4. Position measuring device according to one of the preceding claims, **characterized in that** the first position measurement value (POS1) and the second position measurement value (POS2) are present at an interface (9) for transfer to an external subsequent unit (10).

5. Position measuring device according to Claim 4, **characterized in that** a modification unit (8) is provided, to which at least one of the first and second position measurement values (POS1, POS2) is fed in order to modify at least one of the first and second position measurement values (POS1, POS2) in such a way that the position measurement values (POS2, POS1+POS3+OF) present at the interface (9) for transfer to an external subsequent unit (10) are different.

6. Position measuring device according to one of the preceding Claims 2 to 5, **characterized in that** the code (C) consists of a sequence of code elements (C1 to C5) arranged in succession in the measurement direction X, wherein each code element (C1 to C5) in each case consists of two sub-regions (A, B), which are complementary to one another;
the centre-to-centre spacing of scanning elements (D1 to D12) following one another is less than the length of a sub-region (A, B);
scanning signals (S1 to S12) from scanning elements (D1 to D12) with a mutual centre-to-centre spacing corresponding to the length of a sub-region (A, B) are in each case fed to a comparison device (T1 to T6), which forms a binary item of information (B1 to B6) for the code element (C1 to C5) in a manner dependent on the comparison result.

7. Position measuring device according to Claim 6, **characterized in that** the comparison, devices (T1 to T6) are configured to compare the difference of the scanning signals (S1 to S12) with an intended difference (V) and to output an error signal (F) if the intended difference (V) is undershot.

8. Position measuring device according to Claim 7, **characterized in that** the second selection device (4) selects scanning signals (S1 to S12) of a group of scanning elements (D1 to D12) which are arranged with a mutual centre-to-centre spacing corresponding to the length of the sub-region (A, B), wherein the group whose scanning signals (S1 to S 12) output the fewest error signals (F) is selected.

9. Method for operating an absolute position measuring device, comprising the following method steps:
scanning an absolute code (C) with an arrangement of scanning elements (D1 to D12), wherein the code (C) is arranged on a track and consists of successive code elements (C1 to C5) in a measurement direction X, which form a chain code, wherein a number of the scanning elements (D1 to D12) are respectively associated with each code element (C1 to C5) by virtue of the centre-to-centre spacing of the scanning elements (D1 to D6) being a fraction of the length of the code element (C1 to C6);
selecting scanning signals (S1 to S12) of these scanning elements (D1 to D12);
forming an absolute position measurement value (POS1) from the selected scanning signals (S1 to S12), **characterized by**
setting a first item of selection information (A1) and a second item of selection information (A2) according to different criteria;
selecting scanning signals (S1 to S12) according to a first method in a manner dependent on the first item of selection information (A1) and selecting these according to a second method in a manner dependent on the second item of selection information (A2), which differs from the first method;
forming a first position measurement value (POS1) from the scanning signals (S1 to S12) selected according to the first method;
forming a second position measurement value (POS2) from the scanning signals (S1 to S12) selected according to the second method; and
making the first position measurement value (POS1) and the second position measurement value (POS2) available for error checking.

10. Method according to Claim 9, **characterized in that** the first item of selection information (A1) is obtained by scanning an additional item of information (Z) arranged parallel to the code (C) and **in that** the second item of selection information (A2) is obtained by scanning the code (C).

11. Method according to Claim 9, **characterized in that** the first item of selection information (A1) is obtained by scanning the code (C), and **in that** the second item of selection information (A2) is likewise obtained by scanning the code (C).

12. Method according to one of Claims 9 to 11, **characterized in that** the first position measurement value (POS1) and the second position measurement value (POS2) are compared to one another for error checking.

13. Method according to Claim 12, **characterized in that** the first position measurement value (POS1) and the second position measurement value (POS2) are transferred to a subsequent unit (10).

14. Method according to Claim 13, **characterized in that** at least one of the first and second position measurement values (POS1, POS2) is modified prior to the transfer in such a way that the transferred position measurement values (POS2, POS1+POS3+OF) are different.

15. Method according to one of the preceding Claims 9 to 14, **characterized by** the following method steps:
scanning a code consisting of a sequence of code elements (C1 to C5) arranged in succession in the measurement direction X, wherein code elements (C1 to C5) in each case consist of sub-regions (A, B), which are complementary to one another, and
generating scanning signals (S1 to S12) from scanning elements (D1 to D12), which are arranged with a mutual centre-to-centre spacing that is less than the length of a sub-region (A, B), and
in each case feeding two scanning signals (S1 to S12) of scanning elements (D1 to D12), which are arranged in accordance with the length of the sub-region (A, B), to a comparison device (T1 to T6), which forms a binary item of information (B1 to B6) for the code element (C1 to C5) in a manner dependent on the comparison result.

16. Method according to Claim 15, **characterized in that** the comparison result is compared to an intended value (V) and an error signal (F) is formed in the case of a deviation from the intended value (V).

17. Method according to Claim 16, **characterized in that**, in the second method, the binary items of information (B1 to B6) of the scanning element pairs are selected in a grid corresponding to the length of a code element (C1, C2, C3) for forming the second absolute position measurement value (POS2), the sequence of which generates the fewest errors (F).

## Revendications

1. Dispositif de mesure de position comprenant un arrangement d'éléments de palpage (D1 à D12) destiné à palper un code absolu (C), lequel est disposé dans une piste et se compose d'éléments de code (C1 à C5) formant un code en chaîne disposés les uns à la suite des autres dans le sens de la mesure X, plusieurs des éléments de palpage (D1 à D12) étant respectivement associés à chaque élément de code (C1 à C5) en ce que l'écart entre centres des éléments de palpage (D1 à D6) est une fraction de la longueur d'un élément de code (C1 à C6) ;
un dispositif de sélection (3, 4) destiné à sélectionner des signaux de palpage (S1 à S12) de ces éléments de palpage (D1 à D12) ;
un dispositif de décodage (5) destiné à former une valeur de mesure de position absolue (POS1) à partir des signaux de palpage (S1 à S12) sélectionnés, **caractérisé en ce que** le dispositif de mesure de position est conçu pour définir une première information de sélection (A1) et une deuxième information de sélection (A2) d'après différents critères et
comprend un dispositif de sélection (3, 4) qui est conçu pour effectuer une sélection d'après une première méthode ainsi que pour effectuer une sélection d'après une deuxième méthode, laquelle se différencie de la première méthode **en ce que** les signaux de palpage (S1 à S12), avec la première méthode, sont sélectionnés sur la base de la première information de sélection (A1) et, avec la deuxième méthode, sont sélectionnés sur la base de la deuxième information de sélection (A2), et une première valeur de mesure de position absolue (POS1) étant déterminée à partir des signaux de palpage (S1 à S12) sélectionnés d'après la première méthode et une deuxième valeur de mesure de position absolue (POS2) étant déterminée à partir des signaux de palpage (S1 à S12) sélectionnés d'après la deuxième méthode.

2. Dispositif de mesure de position selon la revendication 1, **caractérisé en ce que** parallèlement au code (C) est disposée une information supplémentaire (Z) à partir de laquelle est obtenue par palpage la première information de sélection (A1) que présente un premier dispositif de sélection (3), et **en ce qu'**il existe un deuxième dispositif de sélection (4) auquel est acheminé la deuxième information de sélection (A2) qui est dérivée des signaux de palpage (S1 à S12) du code (C).

3. Dispositif de mesure de position selon la revendication 1, **caractérisé en ce qu'**il existe un premier dispositif de sélection (3) auquel est acheminé la première information de sélection (A1) qui est dérivée des signaux de palpage (S1 à S12) du code (C), et **en ce qu'**il existe un deuxième dispositif de sélection (4) auquel est acheminé la deuxième information de sélection (A2) qui est elle aussi dérivée des signaux de palpage (S1 à S12) du code (C).

4. Dispositif de mesure de position selon l'une des revendications précédentes, **caractérisé en ce que** la première valeur de mesure de position (POS1) et la deuxième valeur de mesure de position (POS2) sont présentes au niveau d'une interface (9) en vue de la transmission à une unité suivante (10) externe.

5. Dispositif de mesure de position selon la revendication 4, **caractérisé en ce qu'**il existe une unité de modification (8) à laquelle est acheminée au moins l'une des première ou deuxième valeurs de mesure de position (POS1, POS2) en vue de modifier au moins l'une des première ou deuxième valeurs de mesure de position (POS1, POS2) de telle sorte que les valeurs de mesure de position (POS2, POS1+POS3+OF) présentes au niveau de l'interface (9) en vue de la transmission à une unité de suivi (10) externe soient différentes.

6. Dispositif de mesure de position selon l'une des revendications précédentes 2 à 5, **caractérisé en ce que**
le code (C) se compose d'une séquence d'éléments de code (C1 à C5) disposés les uns derrière les autres dans le sens de la mesure X, chaque élément de code (C1 à C5) se composant respectivement de deux zones partielles (A, B) qui sont complémentaires l'une à l'autre ;
l'écart entre centres des éléments de palpage (D1 à D12) successifs est inférieur à la longueur d'une zone partielle (A, B) ;
les signaux de palpage (S1 à S12) respectifs des éléments de palpage (D1 à D12) ayant un écart entre centres réciproque correspondant à la longueur d'une zone partielle (A, B) sont respectivement acheminés à un dispositif de comparaison (T1 à T6) qui, en fonction du résultat de la comparaison, forme une information binaire (B1 à B6) pour l'élément de code (C1 à C5).

7. Dispositif de mesure de position selon la revendication 6, **caractérisé en ce que** les dispositifs de comparaison (T1 à T6) sont conçus pour comparer la différence entre les signaux de palpage (S1 à S12) avec une différence de consigne (V) et pour délivrer un signal d'erreur (F) si la différence devient inférieure à la différence de consigne (V).

8. Dispositif de mesure de position selon la revendication 7, **caractérisé en ce que** le deuxième dispositif de sélection (4) sélectionne les signaux de palpage (S1 à S12) d'un groupe d'éléments de palpage (D1 à D12) qui sont disposés avec un écart entre centres réciproque correspondant à la longueur d'une zone partielle (A, B), le groupe sélectionné étant celui dont les signaux de palpage (S1 à S12) délivrent le moins de signaux d'erreur (F).

9. Procédé pour faire fonctionner un dispositif de mesure de position absolue, comprenant les étapes suivantes :
palpage d'un code absolu (C) avec un arrangement d'éléments de palpage (D1 à D12), le code (C) étant disposé dans une piste et se composant d'éléments de code (C1 à C5) formant un code en chaîne disposés les uns à la suite des autres dans le sens de la mesure X, plusieurs des éléments de palpage (D1 à D12) étant respectivement associés à chaque élément de code (C1 à C5) en ce que l'écart entre centres des éléments de palpage (D1 à D6) est une fraction de la longueur d'un élément de code (C1 à C6) ;
sélection de signaux de palpage (S1 à S12) de ces éléments de palpage (D1 à D12) ;
formation d'une valeur de mesure de position absolue (POS1) à partir des signaux de palpage (S1 à S12) sélectionnés, **caractérisé par**
définition d'une première information de sélection (A1) et d'une deuxième information de sélection (A2) d'après différents critères ;
sélection de signaux de palpage (S1 à S12) d'après une première méthode en fonction de la première information de sélection (A1) ainsi que sélection d'après une deuxième méthode en fonction de la deuxième information de sélection (A2), laquelle se différencie de la première méthode ;
formation d'une première valeur de mesure de position (POS1) à partir des signaux de palpage (S1 à S12) sélectionnés d'après la première méthode ;
formation d'une deuxième valeur de mesure de position (POS2) à partir des signaux de palpage (S1 à S12) sélectionnés d'après la deuxième méthode, et
mise à disposition de la première valeur de mesure de position (POS1) et de la deuxième valeur de mesure de position (POS2) en vue du contrôle des erreurs.

10. Procédé selon la revendication 9, **caractérisé en ce que** la première information de sélection (A1) est obtenue en palpant une information supplémentaire (Z) disposée parallèlement au code (C) et **en ce que** la deuxième information de sélection (A2) est obtenue en palpant le code (C).

11. Procédé selon la revendication 9, **caractérisé en ce que** la première information de sélection (A1) est obtenue en palpant le code (C) et **en ce que** la deuxième information de sélection (A2) est également obtenue en palpant le code (C).

12. Procédé selon l'une des revendications 9 à 11, **caractérisé en ce que** la première valeur de mesure de position absolue (POS1) et de la deuxième valeur de mesure de position absolue (POS2) sont comparées l'une à l'autre en vue du contrôle des erreurs.

13. Procédé selon la revendication 12, **caractérisé en ce que** la première valeur de mesure de position (POS1) et de la deuxième valeur de mesure de position (POS2) sont transmises à une unité suivante (10).

14. Procédé selon la revendication 13, **caractérisé en ce qu'**au moins l'une des première ou deuxième valeurs de mesure de position (POS1, POS2) est modifiée avant la transmission de telle sorte que les valeurs de mesure de position (POS2, POS1+POS3+OF) transmises sont différentes.

15. Procédé selon l'une des revendications 9 à 14, **caractérisé par** les étapes de procédé suivantes :
palpage d'un code (C), composé d'une séquence d'éléments de code (C1 à C5) disposés les uns à la suite des autres dans le sens de la mesure X, les éléments de code (C1 à C5) se composant respectivement de zones partielles (A, B) qui sont complémentaires l'une à l'autre et
génération de signaux de palpage (S1 à S12) à partir des éléments de palpage (D1 à D12) qui sont disposés avec un écart entre centres réciproque inférieur à la longueur d'une zone partielle (A, B), et
acheminement respectivement de deux signaux de palpage (S1 à S12) des éléments de palpage (D1 à D12), qui sont disposés en correspondance à la longueur d'une zone partielle (A, B), à un dispositif de comparaison (T1 à T6) qui, en fonction du résultat de la comparaison,
forme une information binaire (B1 à B6) pour l'élément de code (C1 à C5).

16. Procédé selon la revendication 15, **caractérisé en ce que** le résultat de la comparaison est comparer avec une valeur de consigne (V) et un signal d'erreur (F) est délivré en cas d'écart par rapport à la valeur de consigne (V).

17. Procédé selon la revendication 16, **caractérisé en ce qu'**avec la deuxième méthode, les informations binaires (B1 à B6) des paires d'éléments de palpage qui sont sélectionnées dans une grille conformément à la longueur d'un élément de code (C1, C2, C3) en vue de former la deuxième valeur de mesure de position absolue (POS2) sont celles dont la séquence produit le moins d'erreurs (F).
